# EUROPEAN PATENT SPECIFICATION

(11) **EP 3 781 759 B1**
(45) Date of publication and mention of the grant of the patent: **27.03.2024**
(21) Application number: 19724931.1
(22) Date of filing: 17.04.2019
(51) Int. Cl.: E04B 9/26, E04B 9/22, E04B 9/24, F16B 2/24

(54) **AN IMPROVED DEVICE FOR ASSOCIATING AN ELEMENT TO A STRUCTURE**
VERBESSERTE VORRICHTUNG ZUM VERBINDEN EINES ELEMENTS MIT EINER STRUKTUR
DISPOSITIF AMÉLIORÉ POUR ASSOCIER UN ÉLÉMENT À UNE STRUCTURE

(30) Priority: 18.04.2018 IT 201800004686
(43) Date of publication of application: 24.02.2021
(73) Proprietor: PANEO S.R.L., 30020 Eraclea (VE) (IT)
(72) Inventor: Fiorindo, Dante, 30016 Jesolo (VE) (IT)
(74) Representative: Braidotti, Andrea
(86) International application number: PCT/IB2019/053164
(87) International publication number: WO 2019/202524

(56) References cited:
- WO-A1-2016/114856
- AT-B- 377 560
- AU-A1- 2008 243 230
- GB-A- 802 205
- KR-A-020160 138 854
- US-A- 2 653 367

## Description

The present invention relates to an improved device for associating an element to a structure, preferably for hanging a panel to a support structure.

Various devices are currently known for hanging an element, such as for example a lamp, to a frame.

However, these known devices are not completely satisfactory since they are rather complicated and expensive to make and/or assemble. Furthermore, these devices do not allow an easily removable attachment of the element to the corresponding structure.

Furthermore, the engagement of these known devices with the element to be hung/attached generally requires the use of screws or other hooking means, and therefore the need to have available a suitable tool, such as a screwdriver or a screwing tool.

Not least the fact that such devices are not easily and effortlessly connected to a panel, which is intended to be hung (i.e. fixed in a suspended position) to a frame.

US2653367 describes a clip for removably holding the pin of an ornament, button, insignia or the like. In particular, this clip comprises an arched base, at the center of which is defined a through hole for inserting the pin, and a pair of first elastic arms which depart from one side of the base and a second central arm which develop from the other side of the base and which has a eyelet through which the pin is inserted; a cap is also provided which cooperates with the upper ends of said arms and engages with the tabs within corresponding slots provided in the base of the clip.

US2367283 describes a fastening device suitable for engaging a pin so as to removably retain an article from which said pin protrudes, for example to fix to a fabric a plate provided/associated with a pin. In particular, this device comprises a base, at the center of which is defined a through hole for inserting the pin, and a pair of first elastic arms which develop from one side of the base and a second central arm which develops from the other side of the base and which has a through slot for inserting the pin which is thus held between said slot and a corresponding V-shaped profile formed between said two first elastic arms. Moreover, in this solution, both the first elastic arms and the second central arm are folded so that - in the rest condition - they are substantially parallel with respect to the base.

KR20120116044 describes a clip for a wafer substrate for electroplated solar cells. This clip comprises a horizontal section with two arms spaced apart and parallel to each other, and perpendicular to said horizontal section. In particular, the clip is specifically designed to allow easy installation inside a substrate support panel. In more detail, for this purpose, the horizontal section is parallel to the substrate support panel; one of the two arms has two tabs projecting in opposite directions from each other and arranged at a mutual distance corresponding to the thickness of the substrate support panel; the other arm is folded two or more times at the contact area with the substrate support panel.

AT377560 describes a bracket to support a structure in a suspended way with respect to a "T" section. In particular, this bracket comprises a base from which two outer arms develop and a central arm which - in the non-operational rest condition (i.e. unstressed) - all define, with the base itself, an obtuse angle. Each outer arm and central arm has an intermediate fold towards the inside and ends with a hooked end. Moreover, the bracket is fixed to the structure to be suspended in a suspended manner by means of a rivet which engages on the base of the bracket or by means of a pin which passes through a passing hole provided on the base of the bracket and which is locked by a "V" clip.

G8802205 describes a bracket to fix a luminous device in a suspended way to the ceiling. In particular, this bracket comprises a base and two pairs of arms which extend from the opposite sides of said base without ever crossing each other. Furthermore, each arm ends with a multiple bend which defines a hook for hooking to the luminous device to be supported, while at the base a second U-shaped bracket is fixed by a screw, which is crossed by a rod fixed to the ceiling by means of a third bracket, also shaped like a "U".

WO2016/114856 describes a clip for attaching an airbag in a vehicle. In particular, this clip comprises a central box-like structure to which two pairs of flexible side arms are attached by means of elastic bending. Moreover, one of the arms of each pair has a central opening within which the other arm of the pair is inserted.

AU2008243230 describes a clip for mounting a cover body of an opening. In particular, this clip comprises a folded hairpin base, within which a tongue of the cover body engages, and a pair of elastic arms where one of the arms has a central opening into which the other arm of the pair is inserted.

The purpose of the present invention is to propose an improved device for associating an element to a structure, preferably for hanging a panel to a support structure, which eliminates the aforementioned drawbacks present in the traditional solutions.

Another purpose of the invention is to propose a device which can be easily and effortless connected to the element to be associated/hung to the support structure.

Another purpose of the invention is to propose a device which can be easily and effortless released from the element to be associated/hung to the support structure.

Another purpose of the invention is to propose a device that can be easily and effortless attached to the support structure.

Another purpose of the invention is to propose a device that can be easily and effortless detached from the support structure.

Another purpose of the invention is to propose a device that can be removably connected to the element to be associated/hung and/or removably hooked to the support structure without requiring the use of particular tools.

Another purpose of the invention is to propose a device that is easily and effortless detachable from the support structure by acting only on the element hung/associated to said structure.

Another purpose of the invention is to propose a device that can be connected to the element to be associated/hung without requiring tools or additional fastening members (screws, nails, rivets or the like).

Another purpose of the invention is to propose a device that can be hooked to the support structure without requiring tools or additional fastening members (screws, nails or the like).

Another purpose of the invention is to propose a device that allows a panel to be hung in a simple, easy and rapid manner to a support structure, in particular in order to provide a false ceiling.

Another purpose of the invention is to propose a device that can be implemented in a simple, rapid manner and with low costs.

Another purpose of the invention is to propose a device that can be mass-produced and in a quick and efficient manner.

Another purpose of the invention is to propose a device which has a particularly small size even in the rest condition, i.e. in the absence of external stresses.

Another purpose of the invention is to propose a device which has a particularly small size even when it is hooked to the support structure.

Another purpose of the invention is to propose a device that allows to hang a panel to a support structure - in particular to a section bar or to a bracket fixed to the ceiling - so as to obtain a pleasant overall aesthetic effect and which provides the observer with the feeling of being in front of a high quality solution, both aesthetically and functionally.

Another purpose of the invention is to propose a device that has high functional standards and at the same time an affordable cost, thus allowing the possibility of its widespread distribution.

Another purpose of the invention is to propose a device which is both improved and/or alternative with respect to the traditional solutions.

Another purpose of the invention is to propose a device with an alternative characterization, both in functional and implementation terms, with respect to the traditional ones.

All these purposes, both when considered alone or in any combination thereof, and others which will result from the following description, are achieved, according to the invention, with a device having the features indicated in claim 1, as well as with an installation having the features indicated in claim 13.

In particular, the improved device according to the invention, for associating an element with a structure, preferably for hanging an element, in particular a panel, to a support structure, is characterized in that it is constituted by a single body in metallic material which comprises:
- a base provided with means for its fastening to said element,
- at least a pair of elastic arms which develop from said base and develop longitudinally so as to always define an acute angle with respect to said base and in such a way that, as a whole, said elastic arms cross each other so as to define a substantially "X" shaped conformation, said elastic arms having substantially the same longitudinal extension and being both provided with means for hooking said structure.

Advantageously, said body is obtained by folding a single piece of previously cut sheet metal.

Advantageously, said means for hooking said structure are provided at the free end of said elastic arms and are configured to grab said structure laterally.

Said base comprises means for its mechanical engagement with said element.

Advantageously, said elastic arms are configured in such a way that, following to a thrust/stressing action applied at the upper zone of the elastic arms, the latter pass from a less divergent rest condition to a more divergent condition. Conveniently, in said more divergent condition said hooking means are more spaced from each other with respect to said less divergent condition. Preferably, in said more divergent condition the free ends of said arms (i.e. the opposite ends with respect to those connected to said base) are more spaced from each other with respect to said less divergent condition.

Advantageously, the elastic arms of each pair are connected to the base by means of respective curved connection sections which are configured so that said two elastic arms can pass from a less divergent rest condition to a second more divergent condition without reaching the yield point of said section.

Advantageously, said elastic arms are configured in such a way as to be able to pass from a first less divergent rest condition to a second more divergent condition and from the fact that said device comprises means for maintaining, even in the absence of external stress/thrust, said elastic arms in a condition more divergent than that of rest.

Advantageously, these means for maintaining, even in the absence of external stress/thrust, said elastic arms in a more divergent condition with respect to the rest condition are configured to cause a mutual interlocking of said elastic arms when they reach a determined divergent width which is greater than that provided in said rest condition.

Advantageously, these means for maintaining, even in the absence of external stress/thrust, said elastic arms in a more divergent condition with respect to the rest condition comprise:
- a cut edge of the first elastic arm which engages a cut formed in the second elastic arm, and/or
- a cut edge of the second elastic arm which engages with a cut formed in the first elastic arm.

Said at least one pair of elastic arms develop longitudinally so as to define, both in the rest condition and in the operative hooking condition, an acute angle with respect to said base and in such a way that, as a whole, said elastic arms cross each other so as to define, both in rest condition and in operative use condition, a substantially X-shaped conformation.

Said at least one pair of elastic arms develop longitudinally so as to define, both in the absence of external stress (i.e. in rest condition) and when an external stress/thrust is applied, an acute angle with respect to said base and so that, as a whole, said elastic arms cross each other so as to define, both in the absence of external stress (i.e. in rest condition) and when an external stress/thrust is applied, a substantially X-shaped conformation.

Advantageously, said elastic arms extend longitudinally diagonally in opposite directions. Advantageously, said elastic arms develop longitudinally defining with their base respective angles which, in the rest condition (i.e. in the absence of external stresses), have a width of between 30° and 60°. Advantageously, said elastic arms develop longitudinally so as to define respective angles with the base which are substantially equal to one another. Advantageously, said elastic arms cross laterally, without crossing/penetrating each other. Advantageously, said two elastic arms are positioned side by side. Advantageously, said two elastic arms have no internal openings or through holes. Advantageously, said two elastic arms have the same conformation. Advantageously, said two elastic arms have the same dimensions in length and/or width. Advantageously, said elastic arms develop from the base at two sides of said base which are mutually opposite.

Advantageously, said means for fastening said base to said element to be hung are configured to cause the mechanical joint of said base to said element. Advantageously, said means for fastening said base to said element do not require the use of external fastening members. Said means for fastening said base to said element comprise folded edges of said base configured to engage within corresponding recesses provided in said element.

Advantageously, said base has a substantially flat development. Advantageously, the base has a substantially continuous and full development, i.e. internally it has no openings or through holes. Advantageously, said base has a substantially rectangular shape with protruding portions that end with folded edges defining said means for fastening the base to said element.

Advantageously, said elastic arms are connected to said base through curved connecting sections. Advantageously, said curved connection sections are configured so as to give to the respective elastic arms an elastic yielding such as to allow the inclination of each elastic arm both approaching to and away from the base.

Advantageously, said hooking means comprise an end portion of the elastic arms which is folded, preferably so as to define a hooked portion on each of said arms. Advantageously, the concavities of each hooked portion of the hooking means are substantially opposite each other. Advantageously, said hooking means are substantially coplanar to each other. Advantageously, said hooking means provided in each elastic arm comprise at least two hooked sections which are superimposed on each other.

Advantageously, said two elastic arms have a substantially rectilinear longitudinal extension, i.e. devoid of bends or curvatures in the area comprised between the connecting sections and the hooking means. Advantageously, said elastic arms define a substantially X-shaped conformation both when they are in the first condition that is less divergent and when they are in the second, more divergent condition.

Advantageously, said means for maintaining the stressed and more divergent position of the elastic arms even in the absence of external stress and/or thrust, are provided on the inner edges of said arms. Advantageously, said means, in order to maintain the stressed and more divergent position of the elastic arms even in the absence of external stress and/or thrust, comprise, on each elastic arm, a tab and a cut. Advantageously, said means for maintaining the stressed and more divergent condition of the elastic arms even in the absence of external stress and/or thrust, comprise fins provided on each elastic arm. Advantageously, said fins are folded about 90° with respect to the base section of said elastic arms. Advantageously, said cuts are formed on the respective fins. Advantageously, each tab is defined between the edge of the fin and the respective cut. Advantageously, said tabs and said cut edges are slightly bent with respect to the remaining part of said fins.

Advantageously, said device is configured so that, by applying a thrust/stress action directed towards the base in correspondence of the upper zone of only one of the two arms, they are actuated the means configured to maintain the stressed and more divergent condition of the elastic arms even in the absence of external stress and/or thrust, thus causing the two elastic arms to disengage with each other and therefore causing their passage, due to their elastic return, to the rest condition.

The invention also comprises an installation, preferably for defining a false ceiling, which is characterized in that it comprises at least one element which is suspended from a support structure by means of at least one device according to the invention and in which the base of said device is fastened to said element while the hooking means of said elastic arms are hooked to said support structure.

Advantageously, said support structure comprises a section bar or a bracket. Advantageously, said element comprises a plaster panel. Advantageously, said element comprises a panel made of metallic material and/or mineral fiber and/or plastic or composite material. Advantageously, said element comprises an apparatus for lighting and/or ventilation. Advantageously, said element comprises at least one seat for fastening/constraining said one device to the panel. Advantageously, said device is inserted in said seat rotating it about an axis substantially perpendicular to the base of said device.

Advantageously, said device is configured so that, when the hooking means are engaged and hooked to the support structure, the elastic arms are arranged substantially as if they were in a rest condition, i.e. less diverged.

Advantageously, said device is configured so that the weight of the hanging element causes a reduction in the width of the gap between the elastic arms and therefore a mutual approach of the hooking means provided in said elastic arms. Advantageously, said device is configured so that said means, in order to maintain the stressed and more divergent condition of the elastic arms even in the absence of external stress and/or thrust, are activated when said elastic arms are more widely separated with respect to the condition provided for the engagement of the hooking means with the support structure.

The present invention is further clarified hereinafter in a preferred form of practical embodiment thereof, given for purely exemplifying and non-limiting purposes with reference to the accompanying drawings, in which:
- Figure 1: shows in perspective view a first embodiment of the device according to the invention,
- Figure 2: shows it according to a different perspective view,
- Figure 3: shows in perspective view the piece of cut sheet metal from which the device of figures 1 and 2 can be obtained,
- Figure 4: shows in a perspective view a second embodiment of the device according to the invention with the elastic arms in a first condition (which corresponds to a rest condition, i.e. unstressed),
- Figure 5: shows it according to a different perspective view always with the elastic arms in said first condition,
- Figure 6: shows in perspective view the piece of cut sheet metal from which the device of figures 4 and 5 can be obtained,
- Figure 7: shows in perspective view the second embodiment of the device of fig. 4 and 5 with the elastic arms in a second condition (which corresponds to a condition reached following to the application of an external stress),
- Figure 8: shows it according to a different perspective view still with the elastic arms in said second condition,
- Figure 9: shows in perspective view a panel to be hung,
- Figure 10: shows an enlarged detail of fig. 9
- Figure 11: shows in perspective view the panel of fig. 9 with the devices according to the invention applied,
- Figure 12: shows an enlarged detail of fig. 11
- Figure 13: shows in perspective view the panel of fig. 9 with the devices according to the invention applied, in said first condition, for engagement with a support section bar,
- Figure 14: shows an enlarged detail of fig. 13
- Figure 15: shows in perspective view the panel of fig. 9 with the devices according to the invention applied, in said second condition, for disengagement from the support section bar, and
- Figure 16: shows an enlarged detail of fig. 15.

As can be seen from the figures, the device 2, according to the invention, for associating an element, preferably a panel 4, to a structure - preferably to a support structure, and in particular to a section bar 6 or to a bracket - is constituted from a single body 8 which, preferably, is of metallic material.

Advantageously, the device 2 is configured in particular to hang - that is to say fix from above, or possibly also laterally, so that it remains suspended from the ground or with respect to a horizontal plane - an element, preferably a panel 4, to a structure, such as for example a section bar 6 or a bracket of a support structure.

Conveniently, the device 2 is configured to hang a panel 4 to a section 6, or to a bracket, of a support structure (frame) and this, preferably, in order to realize a false ceiling.

Conveniently, the device 2 is configured to associate/hang any apparatus, for example lighting (for example a lamp or a ceiling light) or ventilation, to a structure, such as for example a section bar 6 or to a bracket of a support structure.

Advantageously, the body 8 is in harmonic steel, preferably AISI 301.

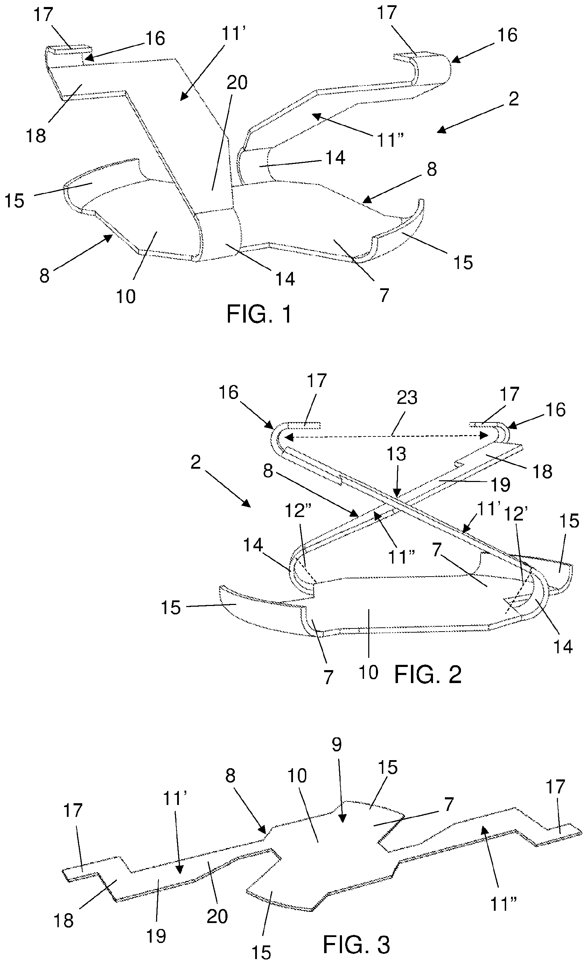

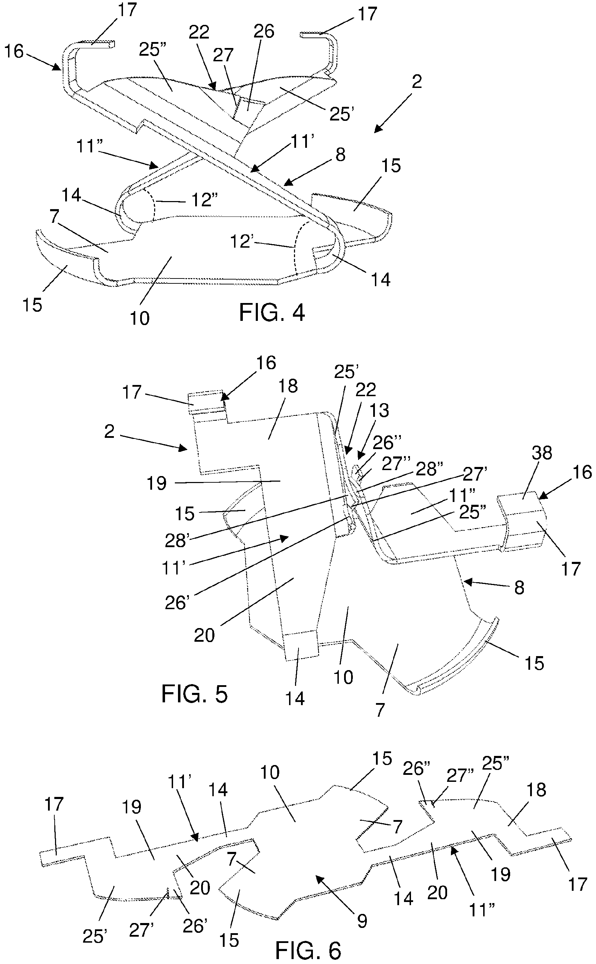

Advantageously, the body 8 is obtained starting from a piece 9 of metal sheet suitably and previously cut and which is then folded (see fig. 3 and 6). In particular, the substantially flat piece of sheet metal 9 (see respectively Figs. 3 and 6) is suitably folded so as to obtain a three-dimensional configuration (see respectively Figs. 1 and 4).

The device 2 comprises a base 10, from which at least two elastic arms develop, respectively 11' and 11". Conveniently, the elastic arms 11' and 11" develop from the base 10 in correspondence with two sides of the latter which are mutually opposite.

Preferably, the base 10 has a substantially flat development. Preferably, the base 10 has a substantially continuous and full development, i.e. it is internally free of openings or through holes. Conveniently, the base 10 comprises means for its fastening to an element/panel 4.

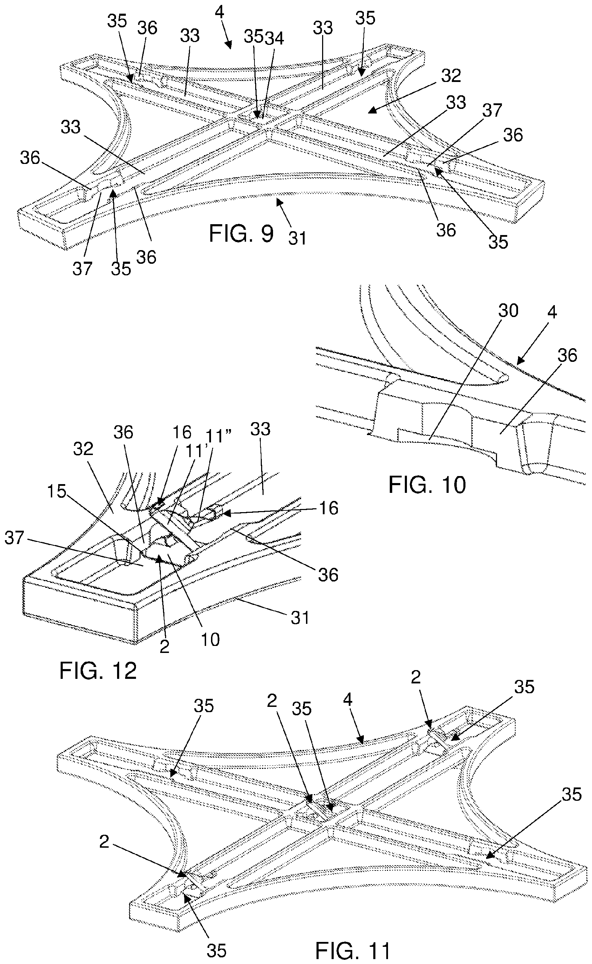

Preferably, these fastening means are configured to cause a mechanical interlocking of the base 10 of the device 2 to the element/panel 4. Preferably, these fastening means do not require the use of external fastening members such as nails, screws, rivets or the like. The fastening means comprise folded edges 15 of said base 10, which are configured to cause engagement of the device 2 inside suitable recesses 30, preferably within undercuts, formed in the element/panel 4 to be associated/hung on the section bar 6 of the support structure (see fig. 12).

Conveniently, the base 10 of the device 2 can be variously shaped. Advantageously, the base 10 has a substantially rectangular shape with protruding portions 7 ending with the aforementioned folded edges 15.

Conveniently, the two elastic arms 11' and 11" are connected to the base 10 by means of respective curved connecting sections 14.

Advantageously, the body 8 is made of a material having entirely, or in some of its zones, an elasticity such as to allow the inclination of each elastic arm 11' and 11" with respect to the base 10. More in detail, the curved sections of fitting 14 are configured so as to give the respective elastic arms 11' and 11" an elastic yielding such as to allow the inclination of each elastic arm 11' and 11", both approaching and away, with respect to the base 10.

In particular, as will become clearer below, the curved connecting sections 14 are configured (both in terms of size and conformation, and in terms of material) so that the two elastic arms 11' and 11" can pass from one first condition (of rest) less divergent to a second (more stressed) condition (with respect to said first condition) without reaching the yield point. In particular, even when the two elastic arms 11' and 11" are in the second most divergent condition, the yield point of the material of which the connecting sections 14 are made is not reached or exceeded, thus allowing the elastic and reversible return of arms 11' and 11" in the first condition that is less divergent (or rest).

The two elastic arms 11' and 11" develop longitudinally diagonally, i.e. so as to always define (i.e. both in the first rest condition and in the second stress condition) an acute angle with respect to said base 10. Moreover, the two elastic arms 11 'and 11" develop longitudinally diagonally in opposite directions so that, as a whole, said elastic arms cross each other and thus always define (i.e. both in the first rest condition and in the second condition of solicitation) a substantially X-shaped conformation. In particular, in order to define the elastic arms 11' and 11" the respective sections of the metal sheet piece 9 (see fig. 6) are folded with respect to the base 10, in opposite directions, so as to define a greater angle of 90°. Conveniently, the two elastic arms 11' and 11" have substantially the same longitudinal extension.

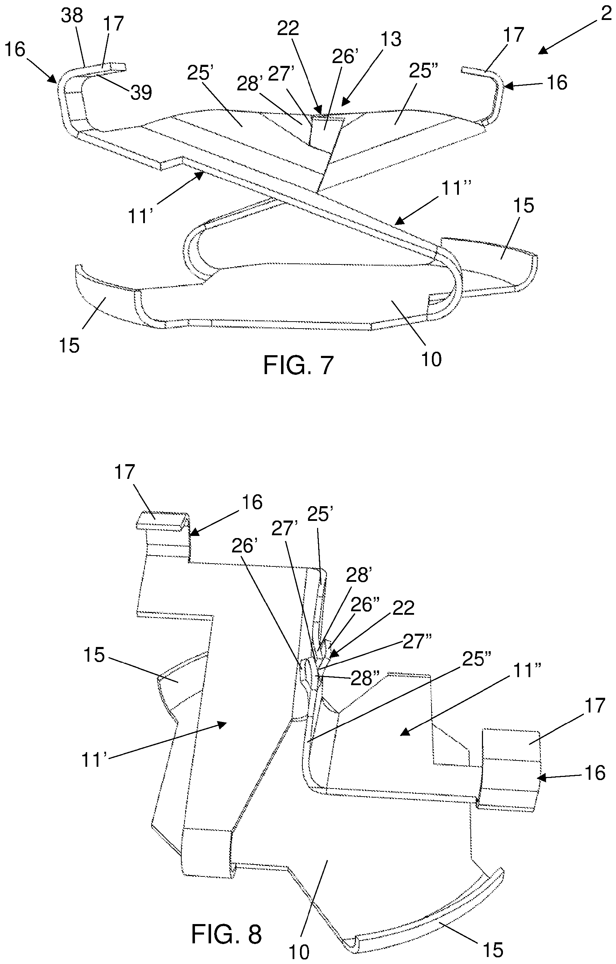

In particular, each elastic arm 11' and 11" develops longitudinally defining with the base respective angles 12' and 12" which, in the rest condition (i.e. in the absence of external stresses, see fig. 2 and 7), they have a width of less than 90° and are preferably 30-60°, even more preferably they are about 45°. Suitably, the angles 12' and 12" - defined by each elastic arm 11' and 11" with the base 10 - are equal to each other.

Suitably, even when they are in the first condition which is less divergent and at rest (i.e. in the absence of external stresses, see figs. 2 and 7), the two elastic arms 11' and 11" extend longitudinally diagonally in opposite directions and so as to define an acute angle with respect to said base 10. Advantageously, the two elastic arms 11', 11" cross each other laterally, without crossing each other, and thus define an "X" conformation both when they are in the first less divergent condition (of rest, in the absence of external stress) and when they are in the second most divergent condition (in the presence of external stress).

Conveniently, the two elastic arms 11' and 11" are positioned one alongside to each other (side by side) , i.e. without an arm penetrating into an opening provided in the other arm, thus simplifying the production process of the device as well as the folding phase to do in order to assume the three-dimensional configuration. Preferably, for this purpose, the two arms 11', 11" are continuous and full, that is, they do not have through openings or through holes. Suitably, the two elastic arms 11' and 11" have the same conformation. Conveniently, the two elastic arms 11' and 11" have the same dimensions, in length and/or width.

Conveniently, the elastic arms 11' and 11" develop longitudinally so as to cross laterally and thus define a crossing 13. In particular, this crossing 13 - which preferably takes place in a substantially the central area of the elastic arms 11' and 11" - it can be obtained without lateral contact between the same elastic arms (see embodiment of figs. 1 and 2) or by contact and lateral engagement between the inner edges of the same elastic arms (see embodiment of figures 4, 5, 7 and 8).

The elastic arms 11' and 11" are provided with hooking means 16, which are preferably defined at their free ends, i.e. the ends which are opposite to those provided with the connecting sections 14 that are associated with the base 10.

Advantageously, these hooking means 16 comprise an end section 17 of the elastic arms 11' and 11" which is folded, preferably so as to define a hooked section. Suitably, the concavities of each hooked section face inwards. Conveniently, the concavities of each hooked section are substantially opposite each other so as to be able to wrap around, grab laterally the section 6, as will be described in more detail below. Preferably, the hooking means 16 are substantially coplanar to each other.

Advantageously, in an embodiment not shown here, the hooking means 16 provided in each elastic arm 11' and 11" comprise two or more hooked sections which are vertically superimposed on each other (i.e. they are at different heights).

Advantageously, the elastic arms 11' and 11" have substantially an inverted "L" shape. In particular, the hooking means 16 are provided at the shorter portion 18 of the "L", while the longer section 19 - which joins with the base by means of the connecting sections 14 - has a tapered part 20.

Preferably, the two elastic arms 11' and 11" have a substantially rectilinear longitudinal extension and, in particular, do not have bends or curvatures in the central area and/or in the area comprised between the connecting sections 14 and the hooking means 16.

Advantageously, according to the inclination of the elastic arms 11' and 11" with respect to the base 10 (and in particular of the widening of the relative upper areas of said arms), the respective hooking means 16 of each elastic arm 11' and 11" approach and move away from each other.

Suitably, following a thrust/stress action applied at the upper zone of the elastic arms 11' and 11", the latter pass from a rest condition (less divergent) to a stressed condition (more divergent). In particular, following a thrust/stress action applied at the upper zone of the elastic arms 11' and 11", the angle 12' and 12" - which is defined between the respective elastic arms 11' and 11" and base 10 - decreases compared to the one provided during their rest condition (unstressed) and, appropriately, increases the distance between the respective hooking means 16 provided on the two elastic arms 11' and 11". Substantially, in the stressed condition, the angle 12' and 12" has a lower width than the one provided in the rest condition (not stressed) and, correspondingly, the distance 23 between the hooking means 16 is greater.

In the first embodiment, shown in Figures 1-3, means 22 are not provided to maintain the stressed condition (more divergent) even in the absence of external stress. Essentially, the stressed condition is maintained as long as an external thrust action is applied at the upper zone of the elastic arms 11' and 11".

Advantageously, in the second embodiment shown in figures 4 to 8, the device 2 also comprises means 22 for maintaining the stressed and more divergent condition of the elastic arms 11' and 11" even in the absence of external stress and/or thrust.

Conveniently, these means 22 are configured to cause a mutual interlocking of the elastic arms 11' and 11" when they are brought into a stressed condition and, in particular, when they reach a determined width of diverging/separation. In particular, the means 22 are provided on the inner edges of the arms 11' and 11", and allow the joint between the respective inner edges of these.

Conveniently, these means comprise, on each elastic arm 11' and 11", a tab, respectively 26' and 26", and a cut, respectively 27' and 27". Conveniently, fins are provided on the inner edge of the elastic arms 11' and 11", respectively 25' and 25"; preferably, these fins are folded about 90° with respect to the base section of said elastic arms 11'and 11".

In particular, the cuts 27' and 27" are formed on the respective fins 25' and 25"; preferably, each tab 26' or 26" is defined between the edge of the fins 25' or 25" and the respective cut 27 'or 27"

Advantageously, the tabs 26 'and 26" are slightly bent with respect to the fins 25' and 25". Conveniently, also the cut edges 28' and 28", which define the cuts 27' and 27" respectively, are slightly bent with respect to the remaining part of the fins 25' and 25". Preferably, while the tabs 26' and 26" are slightly bent towards the outside, the cut edges 28' and 28" are slightly bent inwards (see fig. 5).

In particular, when the elastic arms 11' and 11" are brought into a stressed condition due to a thrust/stress action applied at the upper zone of the elastic arms themselves, the cut edge 28' of a first elastic arm 11' inserts/engages within the cut 27" provided in the other elastic arm 11" and, correspondingly, the cut edge 28" of the other elastic arm 11" is inserted/engaged within the cut 27' provided in the first elastic arm 11'. Appropriately, these engagements prevent the elastic arms 11' and 11" from returning, due to their elastic return, to the rest condition (not stressed), thus allowing instead the maintenance of their stressed and more divergent condition.

Appropriately, by applying a thrust/stressing action - directed towards the base 10 - in correspondence of the upper zone of only one of the two arms, the means 22 are activated so as to cause the mutual disengagement of the two elastic arms 11' and 11" and therefore their passage, due to their elastic return, to the rest condition (unstressed). In particular, this thrust/stress on an elastic arm causes disengagement of the edge portion 28' of that elastic arm from the cut 27" of the other elastic arm 11", thus allowing the return of that first elastic arm to the rest condition; correspondingly, the other elastic arm is also disengaged and can therefore return to the rest condition.

The installation of the device 2 according to the invention to an element 4, as well as the use of this device 2 for associating, preferably for hanging, this element 4 to a support structure 6 clearly results from the above description of the device itself.

Advantageously, as mentioned, the device 2 is particularly suitable for being applied to a panel 4, preferably entirely made of plaster or even plasterboard, to hang it to a section bar 6 of a support structure in order to define a false ceiling. Alternatively, it is understood that the panel 4 can also be made of metallic material, preferably of sheet metal, or of mineral fiber (for example, wool) or also of plastic material (in particular polyurethane) or composite material.

In particular, the panel 4 has a lower surface 31, substantially flat, while at the upper surface 32 there are formed a plurality of grooves 33 and depressed areas, and in particular a central depressed area 34.

Conveniently, along the grooves 33 or in the central depressed area 34, seats 35 are provided for fastening the device 2 to the panel 4. Preferably, said seats 35 comprise two side walls 36, facing each other, and a bottom wall 37, which delimit a space suitable for positioning (insertion) and fastening the device 2.

Conveniently, as shown in Figures 9 and 10, recesses 30, preferably undercuts, are formed inside the side walls 36, preferably at the bottom wall 37, which are shaped and sized to receive and firmly lock inside the folded edges 15 of the base 10 of the device 2.

Conveniently, the positioning and installation of the device 2 inside the recesses/undercuts 30 provided in the seats 35 takes place in the following manner. First of all, the device 2 is positioned inside the seat 35 provided in the panel 4 so that its base 10 goes substantially in contact with the bottom wall 37 provided in said seat. In particular, when performing this operation, the device 2 is positioned so that its folded edges 15 are arranged substantially perpendicularly with respect to the side walls 36 of the seat 35. Subsequently, by gripping the device 2 in correspondence of the hooking means 6, or however in correspondence of the upper zone of the elastic arms 11' or 11", the device itself is rotated of substantially 90° (around an axis perpendicular to the base 10) so that each folded edge 15 of the base 10 enters - and thus engages - inside the recesses 30 provided in the side walls 36 facing each other (see fig. 11 and 12). Preferably, for this purpose, the folded edges 15 have a bevelled profile to facilitate the sliding of the edges themselves during their insertion in the recesses 30.

Advantageously, moreover, inside the recesses 30 a lateral stroke limit can be provided (for example defined by a tooth) with which the folded edge 15 is intended to come into contact laterally following to the aforementioned rotation of about 90° of the base 10. Conveniently, in this way a lateral stop is defined which prevents the rotation of the device 2 during the hooking to the support structure 6.

Conveniently, for this purpose, the folded edge 15 has a height substantially corresponding to, or slightly less than, that of the recess 30. Furthermore, the dimensions and the shape of the base 10 of the device 2 are suitably defined so as to first allow its positioning between the side walls 36 of each seat 35 provided in the panel 4, and subsequently - following the 90° rotation of said device 2 - the engagement of both folded edges 15, formed in correspondence of mutually opposite sides of the base 10, in the respective recesses/undercuts 30.

Then, once one or at least two devices 2 (as shown in particular in figures 11, 13 and 15) have been mounted/fastened in corresponding seats 35, aligned with each other, of the panel 4, the latter is ready to be associated/hung to a section bar 6 of the support structure. Preferably, the section bar 6 is substantially of the traditional type, such as for example the one having an inverted "T" cross section.

In particular, to hang to the section bar 6 the panel 4 with the devices 2, the panel itself is brought closer to said section so that the devices 2 are aligned with the direction of longitudinal development of the section bar itself.

Then, the panel 4 is pushed against the section bar 6 so that the upper part 38 of the hooking means 16 - provided at the ends of the elastic arms 11' and 11" of the devices 2 - contrast with the lower surface 41 of the base portion 40 of the section 6.

In particular, in this way, a thrust is exerted on the elastic arms 11' and 11" which, being elastic, are thus separated and brought closer towards the base 10. More in detail, the angle 12' and 12" - which is defined between the respective elastic arms 11' and 11" and the base 10 - decreases with respect to that provided during the rest condition (not stressed) and, suitably, increases the distance between the respective hooking means 16 provided on the two elastic arms 11' and 11".

Therefore, when - as a result of the contrast between the hooking means 16 of the elastic arms 11' and 11" and the lower surface 41 of the base portion 40 of the section 4 - a distance 23 is reached between the hooking means 16 which exceeds the width of the base portion 40 of the section bar 6, the hooking means themselves, in sequence and or simultaneously, pass from contrasting with their upper part 38 the lower surface 41 to engage and hook, with their lower part 39, the upper surface 42 of the base portion 40.

In this way, therefore, the devices 2 - which are fastened to the panel 4 by the engagement of the folded edges 15 of the base 10 within the recesses/undercuts 30 of the panel itself - are hooked to the base portion 40 of the section bar 6.

Preferably, the device 2 is configured so that, when the hooking means 16 are engaged and hooked to the upper surface 42 of the base portion 40, the elastic arms 11' and 11" are arranged substantially as if they were in a rest condition (unsolicited), that is less divergent.

Advantageously, the configuration of the device 2 is such that the weight of the hanging panel 4 (or of the hanging element) causes a reduction in the width of the divarication between the elastic arms 11' and 11" (and therefore an increase in the width of the angle 12' and 12 ' which is defined between the respective elastic arms 11' and 11" and the base 10). In particular, this causes a mutual approach of the hooking means 16 which thus maintain and ensure a stable hooking of the device (with the corresponding panel 4) to the section bar 6. In other words, higher is the weight of the panel 4, more the hooking means 16 approach and tighten around and grab the section bar 6.

Conveniently, the second embodiment of the device 2 also allows to disassociate/remove the panel 4 from the section bar 6 - and in particular to release the devices 2 fastened to the panel 4 from the section bar 6 - acting exclusively on the panel itself, that is without directly intervening manually on devices 2 or on section bar 6.

In particular, for this purpose, the panel 4 is pushed against the section bar 6 so that the upper edge of the fins 25' and 25" comes into contact and contrasts with the lower surface 41 of the base portion 40 of the section bar 6. In particular, in this way, a thrust is exerted on the elastic arms 11' and 11" which, being elastic, are thus diverged and moved towards the base 10. More in detail, the angle 12' and 12" - which is defined between the respective elastic arms 11' and 11" and the base 10 - decreases with respect to that provided during the previous hooked condition and, suitably, increases the distance between the respective hooking means 16 provided on the two elastic arms 11' and 11".

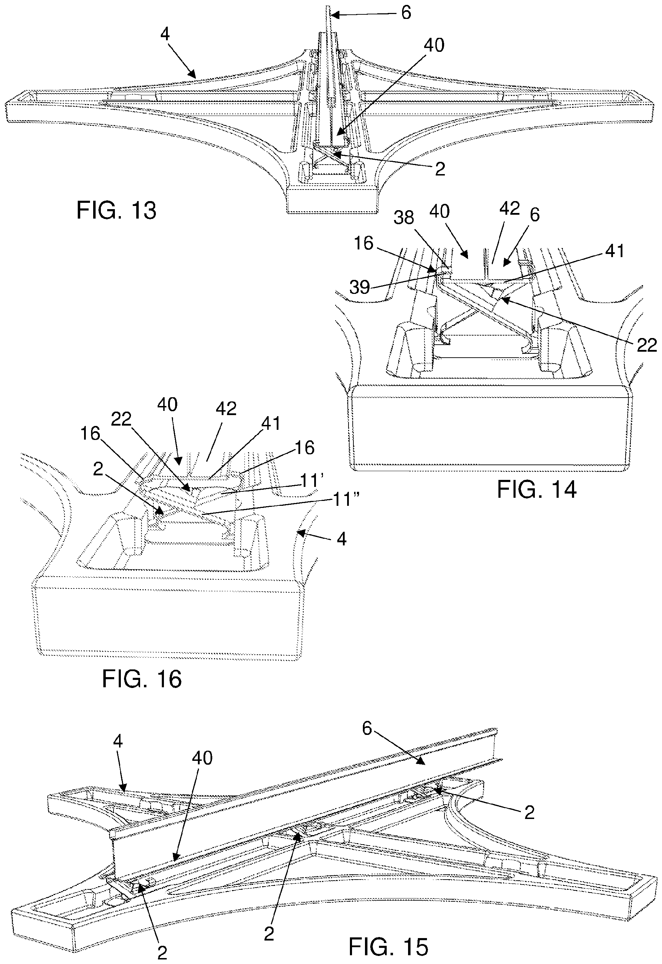

Conveniently, following a thrust/stress action deriving from the contrast between the fins 25' and 25" and the lower surface 41 of the base portion 40 of the section bar 6, the device 2 passes from a rest condition (and less divergent) to a stressed (and more divergent) condition, and this thrust/stress is applied until the means 22 configured to cause a mutual interlocking of the elastic arms 11' and 11" and thus keep them in such a more divergent condition are activated. In particular, the means 22 are activated, when the divarication of the elastic arms 11' and 11" is such as to cause the insertion/engagement of the cut edge 28' of a first elastic arm 11' within the cut 27" provided in the other elastic arm 11" and the insertion/engagement of the cut edge 28" of the other elastic arm 11" within the cut 27' provided in the first elastic arm 11'. Appropriately, these engagements prevent the elastic arms 11' and 11" from returning, due to their elastic return, in the less divergent and resting condition, thus allowing instead the maintenance of their stressed and more divaricated condition (see fig. 15 and 16), thus allowing instead the maintenance of their solicited and more divergent condition (see fig. 15 and 16).

In particular, in this solicited and more divergent condition, and with the means 22 activated, the distance 23 between the hooking means 16 is greater than the width of the base portion 40 of the section bar 6 and, therefore, the panel 4 - with the related devices 2 - can be freely moved away from the section bar 6.

Conveniently, it is understood that the device 2 is configured so that the means 22, in order to maintain the solicited and more divergent condition of the elastic arms 11' and 11" even in the absence of stress and/or external thrust, are activated when said arms elastics are more diverged (i.e. when the angles 12 'and 12" defined with the base 10 are lower) than the condition provided for engaging the hooking means 16 with the base portion 40 of the section bar 6. In other words, the device 2 is configured so that the thrust/stress to be applied to the hooking means 16 to cause the activation of the means 22 must be greater than that necessary to cause engagement of the hooking means 16 with the base portion 40 of the section bar 6.

The device according to the present invention has been illustrated and described here for hanging a panel to a support structure, however, in general, it can be used to hang any object to which the device 2 is fastened at the its base 10. Advantageously, in addition to the fastening means 15 provided on the base 10, the latter can be fastened to the element to be hung also by means of further traditional fastening means, for example by means of traditional mechanical connecting members (for example screws, bolts, etc.) or by gluing.

From the aforegoing it is apparent that the device according to the invention is particularly advantageous with respect to the traditional ones in that:
- is fast and simple to make, as well as economical, given that it can be obtained from a piece of a metal sheet suitably cut and folded;
- can be easily mass produced,
- can be applied simply and quickly, without the need to use tools, both to the element (panel) to be associated/hung, and to the support structure,
- allows a quick removal of the panel from the support structure, which can also be done by acting only on the hanging panel; this is particularly useful in the case of a false ceiling in which the panels are hung one next to the other (or attached), i.e. without a space between said panels a space suitable for allowing to the installer a direct access to the device,
- allows a stable and secure connection of the element to the support structure and, actually, higher is the weight of the element to be hung, more the device is locked/hooked to the support structure.

## Claims

1. Improved device (2) for associating an element (4) to a structure (6), preferably for hanging an element (4), in particular a panel, to a support structure, said device consisting of a single body (8), preferably in metallic material, which comprises:
- a base (10) provided with means (15) for its fastening to said element (4),
- at least a pair of elastic arms (11', 11") which develop from said base (10) and develop longitudinally so as to always define an acute angle with respect to said base (10) and in such a way that, as a whole, said elastic arms (11', 11") cross each other so as to define a substantially "X-shaped" conformation, both said elastic arms (11', 11") having substantially the same longitudinal extension and being both provided with means (16) for hooking said structure (6),
**said** at least one pair of elastic arms (11', 11") develop longitudinally diagonally according to opposite directions so as to define, both in rest condition and in operative hooking condition, an acute angle with respect to said base (10) and in such a way that, as a whole, said elastic arms (11', 11") cross each other so as to define, both in rest condition and in operative hooking condition, a substantially X-shaped conformation, **characterized in that**
said means (15) for its fastening to said element (4) comprise folded edges for its mechanical engagement with said element (4).

2. Device according to claim 1, **characterized in that** said body (8) is obtained by folding a single piece of previously cut sheet metal.

3. Device according to one or more of the preceding claims, **characterized in that** said means (16) for hooking said structure (6) are provided at the free end of said elastic arms (11', 11") and are configured to grab laterally said structure (6).

4. Device according to one or more of the preceding claims, **characterized in that** said base (10) comprises means (15) for its mechanical interlocking within corresponding seats (30) provided in said element (4).

5. Device according to one or more of the preceding claims, **characterized in that** said elastic arms (11', 11") are configured in such a way that, following a thrust/stress action applied at the upper zone of the elastic arms (11', 11"), the latter pass from a less divergent rest condition to a more divergent condition, in said more divergent condition said hooking means (16) being more spaced from each other with respect to said less divergent condition.

6. Device according to one or more of the preceding claims, **characterized in that** the elastic arms (11', 11") of each pair are connected to the base (10) by means of respective curved connection sections (14) which are configured so that said two elastic arms (11', 11") can pass from a less divergent rest condition to a second more divergent condition without reaching the yield point of said sections.

7. Device according to one or more of the preceding claims, **characterized in that** said elastic arms (11', 11") are configured so as to be able to pass from a first less divergent rest condition to a second more divergent condition and from the fact that said device (2) comprises means (22) for maintaining, even in the absence of external stress thrust, said elastic arms (11', 11") in a more divergent condition than the rest one.

8. Device according to the previous claim, **characterized in that** these means (22), for maintaining even in the absence of external stress/thrust said elastic arms (11', 11") in a more divergent condition than that of the rest one, are configured to cause a mutual interlocking of said elastic arms (11', 11") when they reach a determined width of diverging which is greater than that provided in said rest condition.

9. Device according to claims 7 or 8, **characterized in that** said means (22), for maintaining even in the absence of external stress/thrust said elastic arms (11', 11") in a more divergent condition than that of rest one, comprise:
- a cut edge (28') of the first elastic arm (11') which engages with a cut (27") obtained in the second elastic arm (11 ") and / or
- a cut edge (28") of the second elastic arm (11") which engages with a cut (27') obtained in the first elastic arm (11').

10. Device according to one or more of the claims 7-9, **characterized in that** said means (22), for maintaining even in the absence of external stress/thrust said elastic arms (11', 11") in a more divergent condition than that of rest one, comprise:
- a protruding part (28') of the first elastic arm (11') which engages with a depressed zone and/or an opening (27") obtained in the second elastic arm (11"), and/or
- a protruding part (28") of the second elastic arm (11") which engages with a depressed zone and/or an opening (27') obtained in the first elastic arm (11').

11. Device according to one or more of the preceding claims, **characterized in that** said elastic arms (11', 11") develop longitudinally so as to define respective angles (12', 12") with the base (10) which are substantially equal to each other and **in that** said elastic arms (11', 11") are positioned side by side and cross each other sideways, without passing through/penetrating each other.

12. Device according to one or more of the preceding claims, **characterized in that** said hooking means (16) comprise an end section (17) of the elastic arms (11', 11") which is folded, preferably so as to define a hooked section (16) on each of said arms, said hooking means (16) of the two elastic arms (11', 11") being substantially equal to each other and having the respective concavities substantially opposite each other.

13. Installation, preferably to define a false ceiling, **characterized in that** it comprises at least one element (4), preferably a panel (4), which is hung to a support structure (6) by at least one device according to one or more of the preceding claims, the base (10) of said device being fastened to said element (4) while the hooking means (16) of said elastic arms (11', 11") being hooked to said support structure (6).

14. Installation according to the previous claim, **characterized in that** said device (2) is inserted and locked in a seat (35) defined in said element (4) causing it to rotate about an axis perpendicular to the base (10) of said device (2).

15. Installation according to the claims 13 or 14, **characterized in that** said device (2) is configured so that the weight of the hanging element (4) causes a reduction in the width of the divarication between the elastic arms (11', 11") and therefore a mutual approach of the hooking means (16) provided in said elastic arms (11', 11").

## Patentansprüche

1. Verbesserte Vorrichtung (2) zur Verbindung eines Elements (4) mit einer Struktur (6), vorzugsweise zum Aufhängen eines Elements (4), insbesondere einer Platte, an einer Tragstruktur. Die Vorrichtung besteht aus einem einzigen Körper (8), vorzugsweise aus metallischem Material, der folgende Bestandteile umfasst:
- eine Basis (10) versehen mit Mitteln (15) für die Befestigung an dem genannten Element (4),
- mindestens ein Paar elastischer Arme (11', 11"), die sich von der genannten Basis (10) entwickeln und sich längs entwickeln, um immer einen spitzen Winkel zur Basis (10) zu definieren, so dass die elastischen Arme (11', 11") insgesamt gesehen sich überkreuzen, um eine im Wesentlichen "X-förmige" Konformation zu bilden. Beide elastischen Arme (11', 11") haben im Wesentlichen dieselbe Längenerstreckung und sind beide mit Mitteln (16) zum Einhaken an der Struktur (6) versehen,
das mindestens eine Paar elastischer Arme (11', 11") entwickelt sich längs diagonal in entgegengesetzte Richtungen, um sowohl im Ruhezustand als auch im betriebsbereiten Einhakzustand einen spitzen Winkel zur genannten Basis (10) zu definieren. Auf diese Weise überkreuzen sich die elastischen Arme (11', 11") insgesamt, um sowohl im Ruhezustand als auch im betriebsbereiten Einhakzustand eine im Wesentlichen "X-förmige" Konformation zu bilden,
**gekennzeichnet dadurch, dass** die Mittel (15) für die Befestigung an dem genannten Element (4) gefaltete Kanten umfassen, um eine mechanische Verbindung mit dem Element (4) herzustellen.

2. Vorrichtung gemäß Anspruch 1, **gekennzeichnet dadurch, dass** der Körper (8) durch Falten eines einzigen Stücks zuvor geschnittener Blechmetallplatte hergestellt wird.

3. Vorrichtung gemäß einer oder mehrerer der vorhergehenden Ansprüche, **gekennzeichnet dadurch, dass** die Mittel (16) zum Einhaken an der Struktur (6) am freien Ende der elastischen Arme (11', 11") vorgesehen sind und so konfiguriert sind, dass sie seitlich die genannte Struktur (6) erfassen.

4. Vorrichtung gemäß einer oder mehrerer der vorhergehenden Ansprüche, **gekennzeichnet dadurch, dass** die Basis (10) Mittel (15) für ihr mechanisches Verklinken in entsprechenden Sitzen (30), die in dem genannten Element (4) vorgesehen sind, umfasst.

5. Vorrichtung gemäß einer oder mehrerer der vorhergehenden Ansprüche, **gekennzeichnet dadurch, dass** die elastischen Arme (11', 11") so konfiguriert sind, dass sie nach einer Druck- oder Belastungsaktion, die im oberen Bereich der elastischen Arme (11', 11") ausgeübt wird, von einem weniger divergenten Ruhezustand zu einem stärker divergenten Zustand übergehen. In diesem stärker divergenten Zustand sind die Einhakmittel (16) weiter voneinander entfernt im Vergleich zu dem weniger divergenten Zustand.

6. Vorrichtung gemäß einer oder mehrerer der vorhergehenden Ansprüche, **gekennzeichnet dadurch, dass** die elastischen Arme (11', 11") jeder Paarung mit der Basis (10) durch jeweilige gekrümmte Verbindungsbereiche (14) verbunden sind. Diese sind so konfiguriert, dass die beiden elastischen Arme (11', 11") von einem weniger divergenten Ruhezustand zu einem zweiten stärker divergenten Zustand übergehen können, ohne den Streckgrenzenpunkt dieser Bereiche zu erreichen.

7. Vorrichtung gemäß einer oder mehrerer der vorhergehenden Ansprüche, **gekennzeichnet dadurch, dass** die elastischen Arme (11', 11") so konfiguriert sind, dass sie von einem ersten weniger divergenten Ruhezustand zu einem zweiten stärker divergenten Zustand übergehen können. Weiterhin umfasst die Vorrichtung (2) Mittel (22) zum Aufrechterhalten, selbst in Abwesenheit äußerer Belastung, der elastischen Arme (11', 11") in einem stärker divergenten Zustand als im Ruhezustand.

8. Vorrichtung gemäß der vorherigen Anspruch, **gekennzeichnet dadurch, dass** diese Mittel (22) zum Aufrechterhalten, selbst in Abwesenheit äußerer Belastung, der elastischen Arme (11', 11") in einem stärker divergenten Zustand als im Ruhezustand, so konfiguriert sind, dass ein gegenseitiges Verklinkern der elastischen Arme (11', 11") erfolgt, wenn sie eine bestimmte Breite der Divergenz erreichen, die größer ist als die im Ruhezustand vorgesehene.

9. Vorrichtung gemäß den Ansprüchen 7 oder 8, **gekennzeichnet dadurch, dass** die Mittel (22) zum Aufrechterhalten, selbst in Abwesenheit äußerer Belastung, der elastischen Arme (11', 11") in einem stärker divergenten Zustand als im Ruhezustand, umfassen:
- einer Schnittkante (28') des ersten elastischen Arms (11'), die mit einem Schnitt (27") im zweiten elastischen Arm (11") in Eingriff steht und/oder
- einer Schnittkante (28") des zweiten elastischen Arms (11"), die mit einem Schnitt (27') im ersten elastischen Arm (11') in Eingriff steht.

10. Vorrichtung gemäß einer oder mehrerer der Ansprüche 7-9, **gekennzeichnet dadurch, dass** die Mittel (22) zum Aufrechterhalten, selbst in Abwesenheit äußerer Belastung, der elastischen Arme (11', 11") in einem stärker divergenten Zustand als im Ruhezustand, umfassen:
- einem vorstehenden Teil (28') des ersten elastischen Arms (11'), der mit einer eingedellten Zone und/oder einer Öffnung (27") im zweiten elastischen Arm (11") in Eingriff steht, und/oder
- einem vorstehenden Teil (28") des zweiten elastischen Arms (11"), der mit einer eingedellten Zone und/oder einer Öffnung (27') im ersten elastischen Arm (11') in Eingriff steht.

11. Vorrichtung gemäß einer oder mehrerer der vorhergehenden Ansprüche, **gekennzeichnet dadurch, dass** die elastischen Arme (11', 11") sich längs entwickeln, um jeweils Winkel (12', 12") mit der Basis (10) zu definieren, die im Wesentlichen gleich sind. Die elastischen Arme (11', 11") sind seitlich nebeneinander positioniert und überkreuzen sich seitlich, ohne einander zu durchdringen..

12. Vorrichtung gemäß einer oder mehrerer der vorhergehenden Ansprüche, **gekennzeichnet dadurch, dass** die Einhakmittel (16) einen Endabschnitt (17) der elastischen Arme (11', 11") umfassen, der vorzugsweise so gefaltet ist, dass er einen gehakten Abschnitt (16) auf jedem der genannten Arme definiert. Die Einhakmittel (16) der beiden elastischen Arme (11', 11") sind im Wesentlichen gleich und haben die entsprechenden Einbuchtungen im Wesentlichen gegenüberliegend.

13. Installation, vorzugsweise zur Definition einer abgehängten Decke, **gekennzeichnet durch** mindestens ein Element (4), vorzugsweise eine Platte (4), das durch mindestens eine Vorrichtung gemäß einer oder mehrerer der vorherigen Ansprüche an eine Tragstruktur (6) gehängt ist. Die Basis (10) dieser Vorrichtung ist an dem genannten Element (4) befestigt, während die Einhakmittel (16) der elastischen Arme (11', 11") an der genannten Tragstruktur (6) eingehakt sind.

14. Installation gemäß der vorherigen Anspruch, **gekennzeichnet dadurch, dass** die Vorrichtung (2) in einer in dem genannten Element (4) definierten Aussparung (35) eingefügt und verriegelt ist, wodurch eine Drehung um eine Achse erfolgt, die senkrecht zur Basis (10) der Vorrichtung (2) ist.

15. Installation gemäß den Ansprüchen 13 oder 14, **gekennzeichnet dadurch, dass** die Vorrichtung (2) so konfiguriert ist, dass das Gewicht des hängenden Elements (4) zu einer Verringerung der Breite der Spreizung zwischen den elastischen Armen (11', 11") führt und daher ein gegenseitiges Annähern der Einhakmittel (16), die an den elastischen Armen (11', 11") vorgesehen sind, bewirkt wird.

## Revendications

1. Dispositif amélioré (2) pour associer un élément (4) à une structure (6), de préférence pour suspendre un élément (4), en particulier un panneau, à une structure de support, ledit dispositif étant constitué d'un seul corps (8), de préférence en matériau métallique, qui comprend:
- une base (10) munie de moyens (15) pour sa fixation audit élément (4),,
- au moins une paire de bras élastiques (11', 11") qui se développent à partir de ladite base (10) et se développent longitudinalement de manière à définir toujours un angle aigu par rapport à ladite base (10), de telle sorte que, dans leur ensemble, lesdits bras élastiques (11', 11") se croisent pour définir une configuration sensiblement en forme de "X", les deuxdits bras élastiques (11', 11") ayant une extension longitudinale sensiblement identique et étant tous deux pourvus de moyens (16) pour accrocher ladite structure (6),
la ou lesdites paires de bras élastiques (11', 11") se développent longitudinalement en diagonale selon des directions opposées de manière à définir, tant dans l'état de repos que dans l'état d'accrochage opérationnel, un angle aigu par rapport à ladite base (10), de telle sorte que, dans leur ensemble, lesdits bras élastiques (11', 11") se croisent pour définir, tant dans l'état de repos que dans l'état d'accrochage opérationnel, une configuration sensiblement en forme de "X",
**caractérisé en ce que** les moyens (15) pour sa fixation à l'élément (4) comprennent des bords repliés pour son engagement mécanique avec ledit élément (4).

2. Dispositif selon la revendication 1, **caractérisé en ce que** ledit corps (8) est obtenu par pliage d'une seule pièce de tôle préalablement découpée.

3. Dispositif selon une ou plusieurs des revendications précédentes, **caractérisé en ce que** les moyens (16) pour accrocher ladite structure (6) sont situés à l'extrémité libre desdits bras élastiques (11', 11") et sont configurés pour saisir latéralement ladite structure (6).

4. Dispositif selon une ou plusieurs des revendications précédentes, **caractérisé en ce que** ladite base (10) comprend des moyens (15) pour son encliquetage mécanique à l'intérieur de sièges correspondants (30) prévus dans ledit élément (4).

5. Dispositif selon une ou plusieurs des revendications précédentes, **caractérisé en ce que** lesdits bras élastiques (11', 11") sont configurés de telle manière que, suite à une action de poussée/stress appliquée dans la zone supérieure des bras élastiques (11', 11"), ces derniers passent d'un état de repos moins divergent à un état plus divergent, dans ledit état plus divergent, lesdits moyens d'accrochage (16) étant plus espacés les uns des autres par rapport audit état moins divergent.

6. Dispositif selon une ou plusieurs des revendications précédentes, **caractérisé en ce que** les bras élastiques (11', 11") de chaque paire sont reliés à la base (10) au moyen de sections de connexion courbées respectives (14) configurées de telle sorte que lesdits deux bras élastiques (11', 11") peuvent passer d'un état de repos moins divergent à un deuxième état plus divergent sans atteindre le point de rupture desdites sections.

7. Dispositif selon une ou plusieurs des revendications précédentes, **caractérisé en ce que** lesdits bras élastiques (11', 11") sont configurés pour pouvoir passer d'une première condition de repos moins divergente à une deuxième condition plus divergente, et du fait que ledit dispositif (2) comprend des moyens (22) pour maintenir, même en l'absence de poussée de contrainte externe, lesdits bras élastiques (11', 11") dans une condition plus divergente que l'état de repos.

8. Dispositif selon la revendication précédente, **caractérisé en ce que** lesdits moyens (22), pour maintenir même en l'absence de poussée de contrainte externe lesdits bras élastiques (11', 11") dans une condition plus divergente que celle de l'état de repos, sont configurés pour provoquer un encliquetage mutuel desdits bras élastiques (11', 11") lorsqu'ils atteignent une largeur déterminée de divergence qui est supérieure à celle prévue dans ledit état de repos.

9. Dispositif selon les revendications 7 ou 8, **caractérisé en ce que** lesdits moyens (22), pour maintenir même en l'absence de poussée de contrainte externe lesdits bras élastiques (11', 11") dans une condition plus divergente que celle de l'état de repos, comprennent:
- un bord coupé (28') du premier bras élastique (11') qui s'engage avec une découpe (27") réalisée dans le second bras élastique (11") et / ou
- un bord coupé (28") du deuxième bras élastique (11") qui s'engage avec une découpe (27') réalisée dans le premier bras élastique (11').

10. Dispositif selon une ou plusieurs des revendications 7 à 9, **caractérisé en ce que** lesdits moyens (22), pour maintenir même en l'absence de poussée de contrainte externe lesdits bras élastiques (11', 11") dans une condition plus divergente que celle de l'état de repos, comprennent:
- une partie saillante (28') du premier bras élastique (11') qui s'engage avec une zone en creux et/ou une ouverture (27") réalisée dans le second bras élastique (11"), et/ou
- une partie saillante (28") du deuxième bras élastique (11") qui s'engage avec une zone en creux et/ou une ouverture (27') réalisée dans le premier bras élastique (11').

11. Dispositif selon une ou plusieurs des revendications précédentes, **caractérisé en ce que** les bras élastiques (11', 11") se développent longitudinalement de manière à définir des angles respectifs (12', 12") avec la base (10) qui sont sensiblement égaux les uns aux autres et **en ce que** les bras élastiques (11', 11") sont positionnés côte à côte et se croisent latéralement, sans passer à travers/ pénétrer l'un l'autre.

12. Dispositif selon une ou plusieurs des revendications précédentes, **caractérisé en ce que** les moyens d'accrochage (16) comprennent une section d'extrémité (17) des bras élastiques (11', 11") qui est repliée, de préférence de manière à définir une section accrochée (16) sur chacun desdits bras, les moyens d'accrochage (16) des deux bras élastiques (11', 11") étant sensiblement égaux les uns aux autres et ayant les concavités respectives sensiblement opposées.

13. Installation, de préférence pour définir un faux plafond, **caractérisée en ce qu'**elle comprend au moins un élément (4), de préférence un panneau (4), qui est suspendu à une structure de support (6) par au moins un dispositif selon une ou plusieurs des revendications précédentes, la base (10) dudit dispositif étant fixée audit élément (4) tandis que les moyens d'accrochage (16) desdits bras élastiques (11', 11") sont accrochés à ladite structure de support (6).

14. Installation selon la revendication précédente, **caractérisée en ce que** ledit dispositif (2) est inséré et verrouillé dans un siège (35) défini dans ledit élément (4), provoquant ainsi sa rotation autour d'un axe perpendiculaire à la base (10) dudit dispositif (2).

15. Installation selon les revendications 13 ou 14, **caractérisée en ce que** ledit dispositif (2) est configuré de telle sorte que le poids de l'élément suspendu (4) provoque une réduction de la largeur de la divergence entre les bras élastiques (11', 11") et donc un rapprochement mutuel des moyens d'accrochage (16) prévus dans lesdits bras élastiques (11', 11").
